# EUROPÄISCHE PATENTSCHRIFT

(11) **EP 2 529 338 B1**
(45) Veröffentlichungstag und Bekanntmachung des Hinweises auf die Patenterteilung: **06.11.2013**
(21) Anmeldenummer: 10790622.4
(22) Anmeldetag: 10.12.2010
(51) Int. Cl.: G06K 19/077

(54) **TRAGBARER DATENTRÄGER MIT FUNKBASIERTER DATENKOMMUNIKATIONSEINRICHTUNG**
PORTABLE DATA CARRIER HAVING A RADIO-BASED DATA COMMUNICATION DEVICE
SUPPORT DE DONNÉES PORTABLE AVEC UN DISPOSITIF DE RADIOCOMMUNICATION DE DONNÉES

(30) Priorität: 27.01.2010 DE 102010005809
(43) Veröffentlichungstag der Anmeldung: 05.12.2012
(73) Patentinhaber: Giesecke & Devrient GmbH, 81677 München (DE)
(72) Erfinder: FINKENZELLER, Klaus, 85774 Unterföhring (DE); WALLNER, Sebastian, 82827 München (DE); STERZINGER, Hermann, 85598 Baldham (DE); LUYKEN, Johannes, 81825 München (DE)
(86) Internationale Anmeldenummer: PCT/EP2010/007545
(87) Internationale Veröffentlichungsnummer: WO 2011/091830

(56) Entgegenhaltungen:
- EP-A1- 1 944 878
- WO-A1-03/067512
- DE-A1-102007 037 293

## Beschreibung

Die vorliegende Erfindung betrifft tragbare, bevorzugt kartenförmige Daten-träger mit einer induktiv koppelnden Datenkommunikationseinrichtung.

Tragbare Datenträger im Sinne der vorliegenden Erfindung sind insbesondere Speicherkarten, wie Speicherkarten vom Typ micro Secure Digital (micro SD), Compact Flash, Micro Drive, Memory Stick, Secure Digital Card, Multi Media Card, xD-Picture Card, Smart Media Card.

Es ist bekannt, tragbare Datenträger mit einer induktiv koppelnden Daten-kommunikationseinrichtung, beispielsweise mit einer RFID (Radio Frequency Identification) -Transpondereinheit, auszustatten, die zur Datenübertragung eine Antennenspule umfaßt.

Für bestimmte Anwendungen mit tragbaren Datenträgern ist die Reichweite gewöhnlicher RFID-Transpondereinheiten zu gering. Es ist hierfür jedoch bekannt, die Reichweite durch Verwendung aktiver Verfahren zur Datenübertragung zu erhöhen. Hierfür schlagen die WO 2006/000446 A1 und die EP 10801741 A2 die Verwendung von RFID-Transpondereinheiten vor, die mit aktiver Lastmodulation arbeiten.

Problematisch ist die Verwendung solcher Datenträger, wenn die Antennenspule der induktiv koppelnden Datenkommunikationseinrichtung an einer Metallfläche angebracht wird. Dann können in der elektrisch leitenden Metallfläche Wirbelströme induziert werden, die einem durch die Antennenspule erzeugten oszillierenden elektromagnetischen Feld oder einem einfallenden oszillierenden elektromagnetischen Feld entgegenwirken und dieses stark abschwächen. Dementsprechend wird in K. Finkenzeller, RFID-Handbuch, 5. Auflage, Kap. 4.1.12.3 und 4.1.12.4, WO 03/067512 A1, WO 2009/050662 A1 und US 6,371,380 B1 vorgeschlagen, zwischen einer auf einer Metallfläche aufzubringenden Antennenspule und der Metallfläche eine Ferritschicht anzubringen, die den zuvor geschilderten Effekt der Abschwächung des elektromagnetischen Felds durch die Metallfläche unterbindet.

Gemäß K. Finkenzeller, RFID-Handbuch, 5. Auflage, Kap. 4.1.12.1 ist es ein wesentliches Charakteristiken von Ferritwerkstoffen, dass diese einen hohen spezifischen elektrischen Widerstand aufweisen, der je nach Werkstoff 1 bis 10⁶ Ωm beträgt, gegenüber 10⁻⁵ bis 10⁻⁴ Ωm bei Metallen. Infolgedessen sind Wirbelstromverluste klein. Gleichzeitig besitzen Ferritwerkstoffe eine hohe relative Permeabilität, die gemäß der genannten Schrift bis in eine Größenordnung von µᵣ=2000 reichen kann. Am Markt verfügbare Ferritfolien weisen im Frequenzbereich um 13,56 MHz typischerweise eine relative Permeabilität µᵣ von 5 bis 200 auf.

Die relative Permeabilität µᵣ ist eine Materialkonstante, die charakterisiert, wie sich die magnetische Flussdichte B im Raumbereich des Materials ändert, wenn man das Material in ein Magnetfeld der magnetischen Feldstärke H einbringt. Falls µᵣ größer als 1 ist (d.h. das Material verstärkt das Magnetfeld in seinem Inneren), spricht man von Paramagnetismus. Bei ferromagnetischen Materialien ist µᵣ sehr viel größer als 1 und hängt vom Verlauf der magnetischen Feldstärke H ab (Hysteresekurve). Im Einzelnen verknüpft die Permeabilität µ die magnetische Flussdichte B mit der magnetischen Feldstärke H, es gilt B = µ x H. Die Permeabilität µ ergibt sich wiederum aus der magnetischen Feldkonstante µ₀ (Permeabilität des Vakuums) multipliziert mit der relativen Permeabilität µᵣ: µ = µ₀ x µᵣ.

Auch beim Einsatz von insbesondere kartenförmigen tragbaren Datenträgern in elektronischen Geräten, vor allem in Geräten zur Mobilkommunikation wie Mobiltelefonen, Smartbooks, Netbooks oder Notebooks kann es zu Feldschwächungen wie vorstehend beschrieben kommen, und zwar selbst bei Verwendung aktiver Verfahren mittels Lastmodulation, weil häufig Geräte mit Metallgehäuse eingesetzt oder die Datenträger innerhalb eines Gerätes in unmittelbarere Nachbarschaft zu metallischen Komponenten, etwa einem Batteriefach, plaziert werden, die das durch die Antennenspule erzeugte oszillierende elektromagnetische Feld und einfallende oszillierende elektromagnetische Felder abschwächen.

Aus der DE 10 2007 037 293 A1 ist ein besonders zum Einsatz auf metallischen Oberflächen geeigneter RFID-Transponder bekannt, der eine Antennenspule und eine dazu parallele Magnetfeldabschirmungsschicht aufweist. Die Magnetfeldabschirmungsschicht wird von mehreren Streifen gebildet, die aus einem Material mit einer Permeabilität von über 100 000 bestehen und die einen kleinen elektrischen Widerstand haben. Die Streifen sind rechteckförmig und in einer Ebene parallel zur Lage der Antennenspule angeordnet. Die Anordnung kann der Form der Antennenspule nachempfunden sein. Das Streifenmaterial kann Ferritpartikel beinhalten. Zur Erhöhung der bewirkten Magnetfeldabschirmung können unter Zwischenlage von Isolatorschichten mehrere Streifenschichten übereinander angeordnet werden.

Aufgabe der vorliegenden Erfindung ist es, einen tragbaren Datenträger mit einer induktiv koppelnden Datenkommunikationseinrichtung mit Antennenspule bereitzustellen, der auch dann stabil und über eine hinreichende Reichweite mit einem Lesegerät kommunizieren kann, wenn das Gerät ein das von dem Datenträger erzeugte elektromagnetische Feld beeinträchtigendes Gehäuse aufweist oder der Datenträger nahe einer beeinträchtigenden Komponente in dem Gerät angeordnet ist.

Diese Aufgabe wird durch Datenträger mit den Merkmalen der unabhängigen Ansprüche 1 und 15 gelöst. In davon abhängigen Ansprüchen sind vorteilhafte Ausgestaltungen und Weiterbildungen der Erfindung angegeben.

Ein erfindungsgemäßer tragbarer Datenträger basiert auf einem Trägersubstrat und weist eine induktiv koppelnde Datenkommunikationseinrichtung mit einer Antennenspule sowie eine magnetfeldbeeinflussende Abschirmstruktur aus einem Material mit einer relativen Permeabilität µᵣ von mindestens 5 und einem spezifischen elektrischen Widerstand von mindestens 10⁻¹ Ωm auf. Die Abschirmstruktur besitzt zumindest eine senkrecht oder zumindest im wesentlichen senkrecht zur Spulenachse der Antennenspule verlaufende Fläche, die in mindestens zwei Segmente unterteilt ist, sowie einen innerhalb des Trägersubstrats angeordneten Körper, der sich zumindest in einer Richtung parallel zur Spulenachse erstreckt und die erste Fläche kontaktiert.

Gemäß einem ersten Aspekt der vorliegenden Erfindung ist bei einem tragbaren Datenträger bestehend aus einem Trägersubstrat und einer induktiv koppelnden Datenkommunikationseinrichtung, die eine Antennenspule umfasst, eine senkrecht oder zumindest im wesentlichen senkrecht zur Spulenachse der Antennenspule verlaufende Schicht aus einem Material mit einer relativen Permeabilität µᵣ von mindestens 5 und einem spezifischen elektrischen Widerstand von mindestens 10⁻¹ Ωm über oder unter der Antennenspule angeordnet. Die Schicht ist dabei in mindestens zwei Segmente unterteilt, die jeweils durch einen dielektrischen Spalt voneinander getrennt sind. Ferner weist der tragbare Datenträger zusätzlich zu der permeablen Schicht einen innerhalb oder am Rande des Trägersubstrates angeordneten Körper auf, der ebenfalls aus einem Material mit einer relativen Permeabilität µᵣ von mindestens 5 und einem spezifischen elektrischen Widerstand von mindestens 10⁻¹ Ωm besteht und der sich zumindest in einer Richtung parallel zur Spulenachse erstreckt. Der Körper ist mit der Schicht spaltfrei oder näherungsweise spaltfrei verbunden. Körper und Schicht bilden zusammen eine räumliche Abschirmungsstruktur.

Mit dem Begriff "Körper" wird dabei ein dreidimensionales Gebilde bezeichnet, das in alle drei Raumrichtungen eine signifikante räumliche Ausdehnung aufweist. Im Gegensatz dazu ist bei einer "Schicht" das Verhältnis der Dicke zur Breite und/ oder zur Länge sehr klein oder geht gegen null, so dass eine Schicht im Gegensatz zu einem Körper zumindest in erster Näherung als ein zweidimensionales Gebilde anzusehen ist.

Durch die hochpermeable Schicht wird die Antenne von hinter der Schicht liegenden Metallflächen derart abgeschirmt, dass ein von der Antennenspule erzeugtes elektromagnetisches Wechselfeld und ein von einem Lesegerät erzeugtes, am Ort der Antennenspule einfallendes Wechselfeld durch in der Metallfläche erzeugte Wirbelströme nur geringfügig abgeschwächt werden. Dabei werden durch die hochpermeable Schicht die magnetischen Feldlinien der zuvor genannten Wechselfelder innerhalb der Schicht entlang der Ebene der Schicht geführt.

Auf Grund der Segmentierung dieser Schicht durch den dielektrischen Spalt oder vorzugsweise mehrere Spalte werden magnetische Feldlinien innerhalb der Schicht in Längsrichtung des Spalts gelenkt. Dadurch können die magnetischen Feldlinien zu einer oder zu zwei gegenüberliegenden Seitenflächen des portablen Datenträgers gelenkt werden.

Als dielektrischer Spalt wird ein Spalt bezeichnet, in dem sich ein Dielektrikum befindet. Als Dielektrikum wird ein elektrisch isolierendes Material bezeichnet, durch das die zur Datenkommunikation verwendeten, vorwiegend magnetischen Feldlinien hindurchtreten können, d.h. ein Material wie zum Beispiel Luft oder ein Kunststoff, das die zur Datenkommunikation verwendeten magnetischen Felder nur geringfügig schwächt.

Durch den Körper werden magnetische Feldlinien des von der Spule erzeugten magnetischen Wechselfelds oder eines einfallenden, von einem Lesegerät erzeugten magnetischen Wechselfeldes konzentriert und durch den Körper hindurch zu der ersten Schicht gelenkt. Damit wird die Wirkung der ersten Schicht verstärkt.

Damit der Verstärkungseffekt ausgeprägt ist, sollte der Körper in der zur Spulenachse parallelen Richtung eine deutliche Ausdehnung aufweisen. Daher erstreckt sich der Körper in der zur Spulenachse parallelen Richtung vorzugsweise über mindestens 50 %, besonders bevorzugt über mindestens 80% der Resthöhe des Datenträgers, d.h. der Höhe des Datenträgers abzüglich der Höhe der ersten und ggf. der zweiten Schicht. Falls nur die erste Schicht vorhanden ist, erstreckt sich der Körper im Idealfall bis zu der der ersten Schicht gegenüberliegenden Oberfläche des Datenträgers.

Bei einem tragbaren Datenträger, der sowohl die erste als auch die zweite Schicht aufweist, werden die magnetischen Feldlinien durch den Körper hindurch zu der ersten Schicht und, falls der Körper nahe genug an die zweite Schicht heranragt, zu der zweiten Schicht gelenkt, wodurch die Wirkung der ersten und der zweiten Schicht verstärkt wird. Im Idealfall kontaktiert der Körper nicht nur die erste sondern auch die zweite Schicht.

Vorzugsweise ist beabstandet von der genannten Schicht und auf einer der Schicht gegenüberliegenden Seite der Antennenspule eine senkrecht oder zumindest im wesentlichen senkrecht zur Spulenachse der Antennenspule verlaufende zweite Schicht aus einem Material mit einer relativen Permeabilität µᵣ von mindestens 5 und einem spezifischen elektrischen Widerstand von mindestens 10⁻¹ Ωm angeordnet. Besonders bevorzugt ist auch die zweite Schicht in mindestens zwei Segmente unterteilt, die jeweils durch einen dielektrischen Spalt voneinander getrennt sind.

In Analogie zur ersten Schicht wird auch durch die zweite Schicht die Antenne von hinter der zweiten Schicht liegenden Metallflächen abgeschirmt. Durch den dielektrischen Spalt werden magnetische Feldlinien innerhalb der zweiten Schicht in Längsrichtung des Spalts gelenkt.

Bevorzugt sind die Segmente der ersten und/oder der zweiten Schicht länglich, und die Breite des dielektrischen Spalts beträgt 1/2 bis 1/1000 der Breite der an den Spalt angrenzenden Segmente. In diesem Fall ist der zuvor geschilderte Effekt des Ablenkens der magnetischen Feldlinien innerhalb der segmentierten Schicht in Längsrichtung des Spalts besonders ausgeprägt.

Vorzugsweise verläuft der dielektrische Spalt in Längsrichtung des tragbaren Datenträgers. Dadurch können die magnetischen Feldlinien zu zumindest einer Schmalseite des tragbaren Datenträgers gelenkt werden, so dass sie an dieser Schmalseite austreten.

Gegebenenfalls ist es zweckmäßig, einen Durchbruch für den Körper in einem Trägersubstrat bzw einer Platine des tragbaren Datenträgers zu schaffen, um eine möglichst große Ausdehnung des Körpers in Richtung der Spulenachse und ggf. einen Kontakt des Körpers mit einer auf der Platinenrückseite angeordneten hochpermeablen Schicht zu erzielen.

Vorzugsweise sind die Antennenspule und die erste Schicht auf einer Seite und die zweite Schicht auf der gegenüberliegenden Seite des Trägersubstrats angeordnet, wobei der Körper das Trägersubstrat durchdringt.

Dies ermöglicht eine besonders einfache Herstellung des tragbaren Datenträgers, wobei gleichzeitig auch bei einer geringen Höhe des Datenträgers, d. h. bei einer geringen Ausdehnung des Datenträgers senkrecht zu der ersten und der zweiten Schicht ein großer Abstand zwischen der ersten und der zweiten Schicht erreicht werden kann.

Bei dem erfindungsgemäßen tragbaren Datenträger sind vorzugsweise an einem Ende des Datenträgers elektrische Kontakte angeordnet, wobei nur in einem Bereich des den Kontakten gegenüberliegenden anderen Endes des Datenträgers die erste Schicht angeordnet ist. Sofern die Schicht segmentiert ist, erstreckt sich der dielektrische Spalt in einer von dem einen Ende zu dem anderen Ende des Datenträgers verlaufenden Richtung oder zumindest im wesentlichen in dieser Richtung.

Hierdurch werden die magnetischen Feldlinien innerhalb der ersten Schicht so geführt, dass diese verstärkt an der den elektrischen Kontakten gegenüberliegenden Seite aus dem tragbaren Datenträger austreten. In diesem Bereich besitzen Lesesockel, mit denen derartige tragbare Datenträger gelesen werden, normalerweise eine Öffnung, so dass die magnetischen Feldlinien aus dieser Öffnung austreten können. In der Regel handelt es sich bei der den elektrischen Kontakten gegenüberliegenden Seite des tragbaren Datenträgers um eine Schmalseite des tragbaren Datenträgers.

Alternativ oder zusätzlich ist auch der Körper an dem den Kontakten gegenüberliegenden Ende des Datenträgers angeordnet. Das Anbringen des Körpers an dem Ende des Datenträgers ist in vielen Fällen konstruktionstechnisch besonders günstig. Gleichzeitig werden die magnetischen Feldlinien auch durch den am Rand des Datenträgers liegenden Körper zu der ersten Schicht und ggf. zu der zweiten Schicht gelenkt.

Falls der Körper an dem den Kontakten gegenüberliegenden Ende des Datenträgers angeordnet und der Datenträger auch mit der zweiten Schicht ausgestattet ist, ist besonders bevorzugt zwischen dem Körper und der zweiten Schicht ein dielektrischer Spalt vorhanden. Bei dieser besonderen Anordnung treten die magnetischen Feldlinien durch diesen Spalt aus dem tragbaren Datenträger aus.

Gemäß einer anderen bevorzugten Ausführungsform kann der Körper auch derart angeordnet sein, dass er sich bei Betrachtung in Richtung der Spulenachse nur innerhalb der Spule erstreckt. In diesem Fall verlaufen die durch den Körper verlaufenden Magnetfeldlinien zugleich auch durch die Antennenspule. Hierdurch werden die Magnetfeldlinien eines durch die Spule erzeugten elektromagnetischen Wechselfeldes besonders gut durch den Körper konzentriert und durch den Körper hindurch zu der ersten und ggf. der zweiten Schicht gelenkt. Gleichzeitig werden die Magnetfeldlinien eines einfallenden, von einem Lesegerät erzeugten elektromagnetischen Wechselfeldes durch den Körper hindurch und damit durch die Spule gelenkt.

Gemäß einem zweiten Aspekt der Erfindung wird die Abschirmstruktur nicht durch ein Zusammenwirken einer an einer Deckfläche des Datenträgers liegenden Schicht und einen senkrecht dazu angeordneten einfachen Körper gebildet, sondern der der Ferritkörper besitzt eine aus mehreren einfachen Teilkörpern aufgebaute geometrische Form, in der zumindest ein Teilkörper senkrecht oder im wesentlichen senkrecht zu einem anderen Teilkörper liegt. Ein Teilkörper tritt dabei an die Stelle der Schicht, eine Schicht kann bei diesen Ausführungen auch entfallen.

In einer vorteilhaften Ausgestaltung des zweiten Aspekts ist der Körper in Gestalt einer U- oder auch E-förmigen Struktur ausgeführt, wobei die Antennenspule vorzugsweise in mehreren axial beabstandeten Windungen zumindest um einen Schenkel oder um die zwischen den Schenkeln liegende Basis der U-förmigen Struktur, oder um die zwei äußeren Schenkel einer E-förmigen Struktur, und /oder um den mittleren Schenkel einer E-förmigen Struktur herum gewickelt ist.

In diesem Fall werden die magnetischen Feldlinien des von der Spule erzeugten elektromagnetischen Wechselfeldes oder eines von einem Lesegerät erzeugten einfallenden elektromagnetischen Wechselfeldes durch die U-oder E-förmige Struktur gebündelt und durch die U- oder E-förmige Struktur hindurch zu den beiden Enden der Schenkel der U- oder E-förmigen Struktur gelenkt. Auf diese Weise lässt sich die Ausrichtung des aus der Karte austretenden elektromagnetischen Wechselfeldes einfach und effektiv einstellen.

Gemäß einer ersten Ausführungsform handelt es sich bei der U-förmigen Struktur um einen integralen U-förmiger Körper. Der integrale U-förmige Körper ist normalerweise zwischen der Basis und jedem der Schenkel um ca. 90° gekrümmt. Alternativ kann der integrale U-förmige Körper insbesondere auch gleichmäßig zwischen den beiden Schenkeln um ca. 180° gekrümmt sein, d.h. eine Hufeisenform aufweisen.

Vorzugsweise enden bei einem Datenträger, bei dem an einem Ende elektrische Kontakte angeordnet sind, die Schenkel des U-förmigen Körpers in einem Bereich des den Kontakten gegenüberliegenden anderen Endes des Datenträgers. In diesem Fall werden die magnetischen Feldlinien innerhalb der U-förmigen Struktur so geführt, dass diese an der den elektrischen Kontakten gegenüberliegenden Seite des Datenträgers austreten. Wie zuvor dargestellt, besitzen Lesesockel, mit denen derartige tragbare Datenträger gelesen werden, in diesem Bereich normalerweise eine Öffnung, so dass die magnetischen Feldlinien aus dieser Öffnung austreten können.

Gemäß einer anderen vorteilhaften Ausführungsform wird die U-förmige Struktur aus einer hochpermeablen Schicht und einem L-förmigen Körper, der einen ersten und einen zweiten Schenkel besitzt und mit dem ersten Schenkel die Schicht kontaktiert, gebildet, wobei die Schicht vorzugsweise in mindestens zwei Segmente unterteilt ist, die jeweils durch einen dielektrischen Spalt voneinander getrennt sind. Der L-förmige Körper ist normalerweise zwischen seinen beiden Schenkeln um ca. 90° gekrümmt.

Dabei werden die Feldlinien durch die Schicht und den ersten Schenkel des L-förmigen Körpers hindurch zu dem Ende des zweiten Schenkels des L-förmigen Körpers gelenkt. Ist die Schicht segmentiert, so werden die magnetischen Feldlinien durch den zumindest einen dielektrischen Spalt innerhalb der Schicht in Längsrichtung des Spalts gelenkt. Dieser erstreckt sich vorzugsweise in einer zu dem zweiten Schenkel des L-förmigen Körpers parallelen Richtung, um die magnetischen Feldlinien in dieser Richtung zu führen.

Vorzugsweise endet bei einem Datenträger, bei dem an einem Ende elektrische Kontakte angeordnet sind, der zweite Schenkel des L-förmigen Körpers in einem Bereich des den Kontakten gegenüberliegenden anderen Endes des Datenträgers.

In diesem Fall werden die magnetischen Feldlinien innerhalb des L-förmigen Körpers und der hochpermeablen Schicht so geführt, dass diese an der den elektrischen Kontakten gegenüberliegenden Seite des Datenträgers austreten.

Vorzugsweise ist die Spule um den zweiten Schenkel des L-förmigen Körpers gewickelt. Dieser erstreckt sich normalerweise im wesentlichen parallel zu der hochpermeablen Schicht, ist daher normalerweise länger als der zweite Schenkel und bietet somit mehr Platz für die Anordnung der Spule.

Besonders vorteilhaft wird die U-förmige Struktur aus einer ersten Schicht, einer von der ersten Schicht beabstandeten zweiten Schicht und einem Körper, der die erste und die zweite Schicht kontaktiert, gebildet. Dabei ist vorzugsweise wiederum zumindest eine der beiden Schichten in mindestens zwei Segmente unterteilt, die jeweils durch einen dielektrischen Spalt voneinander getrennt sind.

Bei dieser Anordnung werden die Feldlinien durch den Körper und die erste und die zweite Schicht hindurch gelenkt und treten aus den freien Enden der beiden Schenkel der U-förmigen Struktur, d.h. aus den beiden Schichten, aus.

Vorzugsweise sind bei einem Datenträger, bei dem an einem Ende elektrische Kontakte angeordnet sind, nur im Bereich des den Kontakten gegenüberliegenden anderen Endes des Datenträgers die erste Schicht und die zweite Schicht angeordnet. In diesem Fall werden die magnetischen Feldlinien innerhalb des Körpers und der beiden Schichten so geführt, dass diese verstärkt an der den elektrischen Kontakten gegenüberliegenden Seite des Datenträgers austreten. Wie zuvor dargestellt ist idealerweise zumindest eine der beiden Schichten in mindestens zwei Segmente unterteilt, die jeweils durch einen dielektrischen Spalt voneinander getrennt sind. Dieser Spalt läuft vorzugsweise auf die den elektrischen Kontakten gegenüberliegenden Seite des Datenträgers zu.

Damit das Material der ersten und der zweiten Schicht sowie das Material des Körpers die Magnetfeldlinien ablenkt, gleichzeitig jedoch nur geringfügig durch induzierte Wirbelströme schwächt, besitzt es in allen erfindungsgemäßen Aspekten eine möglichst hohe relative Permeabilität µᵣ und gleichzeitig eine möglichst geringe elektrische Leitfähigkeit, d.h. einen möglichst hohen spezifischen elektrischen Widerstand.

Bevorzugt hat die relative Permeabilität µᵣ (der ersten Schicht oder der zweiten Schicht oder des Körpers) einen Wert von mindestens 100, besonders bevorzugt mindestens 140, 160, 180 oder 200. Ebenso bevorzugt hat der spezifische elektrische Widerstand einen Wert von mindestens 1, 10, 10², 10³, 10⁴, 10⁵ oder gar 10⁶ Ωm. Außerdem ist der Imaginärteil der komplexen Permeabilität µᵣ", der die Größe der Ummagnetisierungsverluste im Material kennzeichnet, möglichst klein, das heißt, die Ummagnetisierungsverluste sind möglichst klein zu halten. Die zuvor genannten Werte beziehen sich dabei auf den Frequenzbereich des zur Datenübertragung verwendeten elektromagnetischen Wechselfeldes. Dieser liegt vorzugsweise bei 13, 56 MHz.

Bei dem Material der ersten und der zweiten Schicht sowie dem Material des Körpers kann es sich insbesondere um ein Ferritmaterial handeln.

In vorteilhafter Weise wird die senkrecht oder zumindest im wesentlichen senkrecht zur Spulenachse der Antennenspule verlaufende Schicht aus einem Material mit einer relativen Permeabilität µᵣ von mindestens 5 und einem spezifischen elektrischen Widerstand von mindestens 10⁻¹ Ωm durch eine polymere Vergussmasse mit darin eingelagerten ferromagnetischen Partikeln gebildet.

Die permeable Vergussmasse weist bevorzugt eine relative Permeabilität µᵣ von mindestens 10 besonders bevorzugt von mindestens 100 auf. Die zuvor genannten Werte beziehen sich dabei auf den Frequenzbereich des elektromagnetischen Wechselfeldes. Dieser liegt vorzugsweise bei 13, 56 MHz. Bei der permeablen Vergussmasse handelt es sich vorzugsweise um ein thermoplastisches Polymer oder um ein vernetzendes Polymer mit ferromagnetischen Partikeln.

Bei einem erfindungsgemäßen Verfahren zum Herstellen eines tragbaren Datenträgers gemäß der Erfindung erfolgt das Bilden der aus der permeablen Vergussmasse bestehenden Schicht vorzugsweise unter Einwirkung eines Magnetfelds. Besonders bevorzugt wird das Magnetfeld beim Vergießen und / oder beim Verfestigungsprozess der Vergussmasse angelegt.

Entscheidend für die erreichbare relative Permeabilität µᵣ ist die Ausrichtung der ferromagnetischen Partikel innerhalb der Vergussmasse. Durch die Einwirkung eines Magnetfelds beim Bilden der aus der permeablen Vergussmasse bestehenden Schicht, d.h. beim Vergießen bzw. bei dem Verfestigungsprozess, kann eine hohe relative Permeabilität µᵣ der Vergussmasse erzielt werden.

Bei dem tragbaren Datenträger gemäß der Erfindung handelt es sich bei der induktiv koppelnden Datenkommunikationseinrichtung vorzugsweise um eine RFID-Transpondereinheit, besonders bevorzugt um eine RFID-Transpondereinheit, die mit aktiver Lastmodulation arbeitet, oder auch um eine sonstige funkbasierte Datenkommunikationseinrichtung, die ein aktives Verfahren zum Senden von Daten verwendet.

Weitere Merkmale und Vorteile der Erfindung ergeben sich aus der folgenden Beschreibung der erfindungsgemäßen Ausführungsbeispiele sowie weiterer Ausführungsalternativen im Zusammenhang mit den Zeichnungen, die schematisch zeigen:
- Figur 1:: einen kartenförmigen tragbaren Datenträger mit einseitig angeordneter segmentierter Ferritschicht, und einem zentralen Ferritkörper,
- Figur 2:: einen tragbaren kartenförmigen Datenträger mit beidseitig angeordneten segmentierten Ferritschichten,
- Figur 3:: einen tragbaren kartenförmigen Datenträger mit einseitig angeordneter vollflächiger Ferritschicht und einem zentralen Ferritkörper,
- Figur 4:: einen tragbaren kartenförmigen Datenträger mit beidseitig angeordneten vollflächigen Ferritschichten und einem außenseitig angeordneten Ferritkörper,
- Figur 5:: einen tragbaren kartenförmigen Datenträger mit einem U-förmigen Ferritkörper und einer Antennenspule, die um eine zwischen zwei Schenkeln des U-förmigen Körpers liegende Basis herum gewickelt ist,
- Figur 6:: einen tragbaren kartenförmigen Datenträger mit einer Eförmigen Ferritschicht-Struktur, wobei eine Antennenspule um den zentralen Schenkel des E-förmigen Körpers herum gewickelt ist,
- Figur 7:: einen tragbaren kartenförmigen Datenträger mit einer Uförmigen Struktur aus einer Ferritschicht und einem L-förmigen Ferritkörper, wobei eine Antennenspule um einen Schenkel des L-förmigen Körpers herum gewickelt ist,
- Figur 8:: einen tragbaren kartenförmigen Datenträger mit einer Uförmigen Struktur aus einer ersten Ferritschicht, einer zweiten Ferritschicht und einem zentralen Ferritkörper, wobei eine Antennenspule um den Körper herum gewickelt ist, und
- Figur 9:: einen tragbaren kartenförmigen Datenträger mit einer Ferritpartikel enthaltenden Vergussmasse, die eine erste Ferritschicht bildet, sowie einer zweiten Ferritschicht, wobei zwischen der Vergussmasse und der zweiten Ferritschicht ein dielektrischer Spalt gebildet wird.

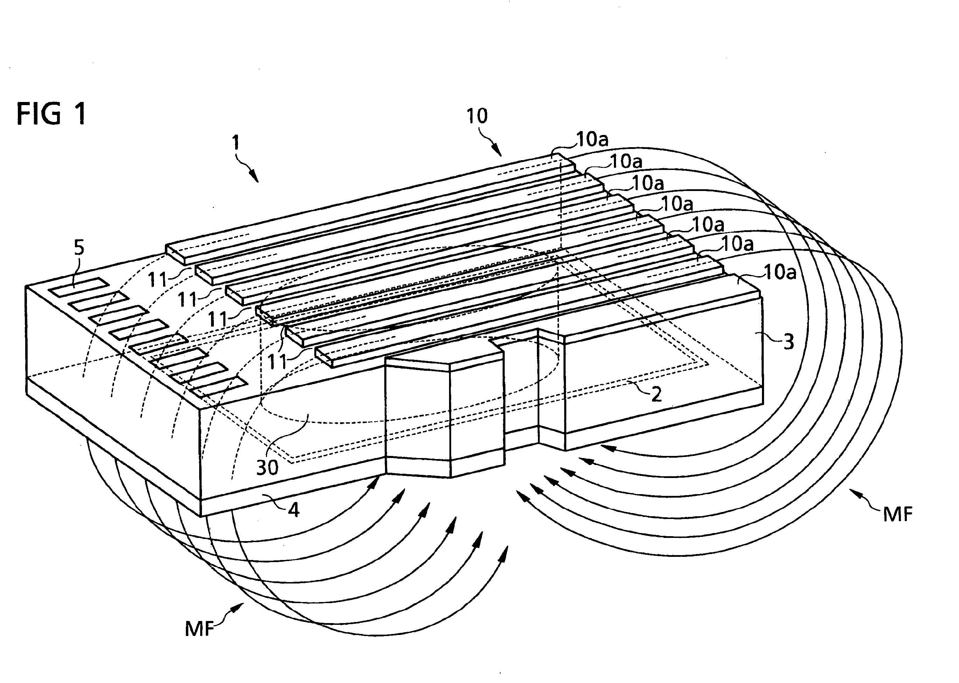

In den Figuren 1 bis 9 ist schematisch jeweils ein tragbarer Datenträger 1 dargestellt, der, auch wenn das nicht explizit gezeigt ist, immer eine induktiv koppelnde Datenkommunikationseinrichtung aufweist. Im folgenden wird für den tragbaren Datenträger 1 stets eine Ausführung in Kartenform zugrundegelegt. Die nachfolgend beschriebenen Lösungen sind aber auch auf tragbare Datenträger 1 mit anderen Gehäuseformen übertragbar.

Von der Datenkommunikationseinrichtung ist jeweils nur eine Antennenspule 2 dargestellt. Die Datenträger 1 sind auf einer Leiterplatte 4, z.B. einer Platine, aufgebaut, auf der vorzugsweise - hier nicht dargestellte - Speicherchips und eine Steuereinrichtung der Datenkommunikationseinrichtung sowie ggf. die Antennenspule 2 angeordnet sind. Desweiteren können Kontaktanschlüsse 5 für den kontaktbehafteten Datenaustausch vorgesehen sein, die je nach Datenträgertyp verschieden sein können und hier nur in Figur 1 dargestellt sind.

In den Ausführungsbeispielen handelt es sich bei den kartenförmigen Datenträgern 1 um Speicherkarten vom Typ micro SD (micro Secure Digital). Die dargestellten Merkmale sind jedoch nicht auf diesen Typ beschränkt. Vielmehr kann es sich bei den kartenförmigen Datenträgern 1 auch um beliebige sonstige kartenförmige Datenträger 1 handeln, insbesondere um kartenförmige Datenträger von einem der in der Beschreibungseinleitung aufgelisteten Typen.

Über der Leiterplatte 4 befindet sich in den Ausführungsbeispielen der Figuren 1 bis 9 ein Trägersubstrat 3, das den Hauptkörper des Datenträgers 1 bildet. Das Trägersubstrat 3 kann beispielsweise durch eine Vergussmasse, insbesondere eine polymere Vergussmasse, gebildet sein, in die diverse Komponenten des Datenträgers 1, wie z.B. die Speicherchips und die Steuereinrichtung eingegossen sind. Der Datenträger 1 besitzt die Form eines flachen, quaderartigen Körpers mit zwei großen Deckflächen, die eine Ober- und eine Unterseite bilden, sowie einem im Vergleich zu den Abmessungen der Deckflächen niedrigen umlaufenden Rand.

In den Figuren ist schematisch der Verlauf einzelner magnetischer Feldlinien MF angedeutet. Dabei sind die innerhalb der Datenträger verlaufenden magnetischen Feldlinien MF gestrichelt und die außerhalb der Datenträger verlaufenden magnetischen Feldlinien MF durchgehend dargestellt. Die rein schematisch dargestellten magnetischen Feldlinien MF sollen die Führung der magnetischen Feldlinien MF illustrieren, spiegeln aber die exakten physikalischen Gegebenheiten nicht wider.

Auf der Oberseite des in Figur 1 dargestellten kartenförmigen Datenträgers 1 ist eine ferritische Fläche 10 in Gestalt einer Schicht ausgebildet, die Bestandteile 10a aus einem Ferritmaterial enthält. Die im folgenden einfach als Schicht bezeichnete ferritische Fläche 10 ist flächig ausgeführt und bedeckt dem größten Teil der oberen Deckfläche des Datenträgers 1. Sie verläuft senkrecht zu der Spulenachse der Antennenspule 2 weist mehrere längliche Segmente 10a auf, die das Ferritmaterial enthalten. Die Segmente 10a sind jeweils durch einen Spalt 11 aus einem dielektrischen Material, etwa einem nichtleitenden Kunststoff, einem nichtleitenden Lack, Glas, oder Luft voneinander getrennt sind, im folgenden wird der Spalt 11 als dielektrischer Spalt bezeichnet. Anstelle eines Ferritmaterials kann bei diesem und allen weiteren Ausführungsbeispielen auch ein anderes Material mit einer relativen Permeabilität µᵣ von mindestens 5 und einem spezifischen elektrischen Widerstand von mindestens 10⁻¹ Ωm vorgesehen werden.

Durch die Schicht 10 werden die magnetischen Feldlinien MF des durch die Sendespule 2 erzeugten Magnetfelds innerhalb der Schicht 10 entlang der Ebene der Schicht 10 geführt und in Längsrichtung der dielektrischen Spalte 11 gelenkt, die wiederum in Längsrichtung des kartenförmigen Datenträgers 1 verlaufen. Somit treten die magnetischen Feldlinien MF verstärkt an den Schmalseiten des kartenförmigen Datenträgers 1 aus.

Wenn ein derartiger Datenträger 1 in einen Lesesockel eingebracht wird, ragt häufig eine der Seiten des Datenträgers 1, bei der in Figur 1 dargestellten micro SD Karte die rechte Schmalseite, aus einer Öffnung des Lesesockels heraus. Damit die magnetischen Feldlinien MF aus dieser Öffnung austreten können, werden sie mittels der Schicht 10 auch zu dieser Seite geführt. In Analogie dazu werden die magnetischen Feldlinien MF eines von einem externen Lesegerät generierten elektromagnetischen Wechselfeldes von den Schmalseiten des Datenträgers 1 aus über die Schicht 10 in Längsrichtung der Spalte zu der Antennenspule 2 geführt.

Innerhalb des Trägersubstrats 3 ist weiter ein Körper 30 aus einem Ferritmaterial angeordnet. Der im folgenden Ferritkörper genannte Körper 30 erstreckt sich auch in einer Richtung parallel zur Spulenachse. Der Körper 30 besitzt vorzugsweise eine einfache Geometrie mit einer Hauptachse und z.B. ellipsoider oder rechteckförmiger Grundfläche und beansprucht einen Teil des Volumens des Trägersubstrates. Die Fläche seine Deckseiten sind kleiner als die Fläche der Schicht 10, so dass Ferritkörper 30 und Schicht 10 im Querschnitt zusammen eine T-Form bilden.

Der Ferritkörper 30 kontaktiert die Schicht 10 im Sinne der Herstellung eines durchgehenden magnetischen Flusses, d.h. er steht so mit der Schicht 10 in Verbindung, dass zwischen der Schicht 10 und dem Ferritkörper 30 kein wirksamer dielektrischer Spalt entsteht, der den magnetischen Fluß stören würde. Der Körper 30 ist hierzu mit ersten Schicht 10 spaltfrei oder näherungsweise spaltfrei verbunden. Zweckmäßig liegt der Körper 30 physisch unmittelbar an der Schicht 10 an. Bis zu gewissen Grenzen, deren Größen in Bezug zur den jeweiligen räumlichen Abmessungen von Schicht 10 und Körper 30 stehen und die im Falle eines Datenträgers im micro SD Kartenformat bei etwa 50 bis 100 µm liegen, sind Körper 30 und Schicht näherungsweise spaltfrei verbunden; in diesen Grenzen kann zwischen Körper 30 und Schicht auch ein mit Luft und/oder Material gefüllter Spalt verbleiben, ohne dass eine wesentliche Verschlechterung der Magnetfeldbeeinflussung entsteht. Erreicht ein Spalt eine größere Dicke, muss er mit Material mit einer relativen Permeabilität µᵣ von mindestens 5 gefüllt werden; zweckmäßig geschieht dies unabhängig von der Dicke. Die vorbeschriebene spaltfreie oder näherungsweise spaltfreie Verbindung zwischen Schicht 10 und Körper 30 wird nachfolgend als Kontaktieren bezeichnet.

Anstelle des Ferritmaterials kann für den Körper 30 wiederum auch ein anderes Material mit einer relativen Permeabilität µᵣ von mindestens 5 und einem spezifischen elektrischen Widerstand von mindestens 10⁻¹ Ωm verwendet werden.

Durch die spaltfreie Verbindung des Ferritkörpers 30 mit der Schicht 10 entsteht eine Abschirmungsstruktur, die einen T-förmigen Längsquerschnitt aufweist. Diese Abschirmungsstruktur beeinflußt auf den Datenträger 1 einwirkende oder von dem Datenträger 1 ausgehende Magnetfelder. Durch den Ferritkörper 30 werden dabei magnetische Feldlinien MF des von der Spule 2 erzeugten magnetischen Wechselfeldes oder eines einfallenden, von einem Lesegerät erzeugten magnetischen Wechselfeldes konzentriert und verlaufen durch den Ferritkörper 30 hindurch von und zu der Schicht 10 auf der Oberseite des Datenträgers. Dadurch wird der Effekt des Ableitens der magnetischen Feldlinien MF in dieser Schicht 10 verstärkt.

Dementsprechend weist der Ferritkörper 30 in der zur Spulenachse parallelen Richtung eine deutliche Ausdehnung auf und erstreckt sich im Ausführungsbeispiel in der zur Spulenachse parallelen Richtung über mehr als 80 % der Resthöhe des Datenträgers 1, d.h. der Höhe des Datenträgers 1 abzüglich der Höhe der Schicht 10. Je nach Schichtaufbau des Datenträgers 1 kann der Ferritkörper 30 aber auch weniger, z.B. nur 50% der Resthöhe des Datenträgers 1 ausmachen.

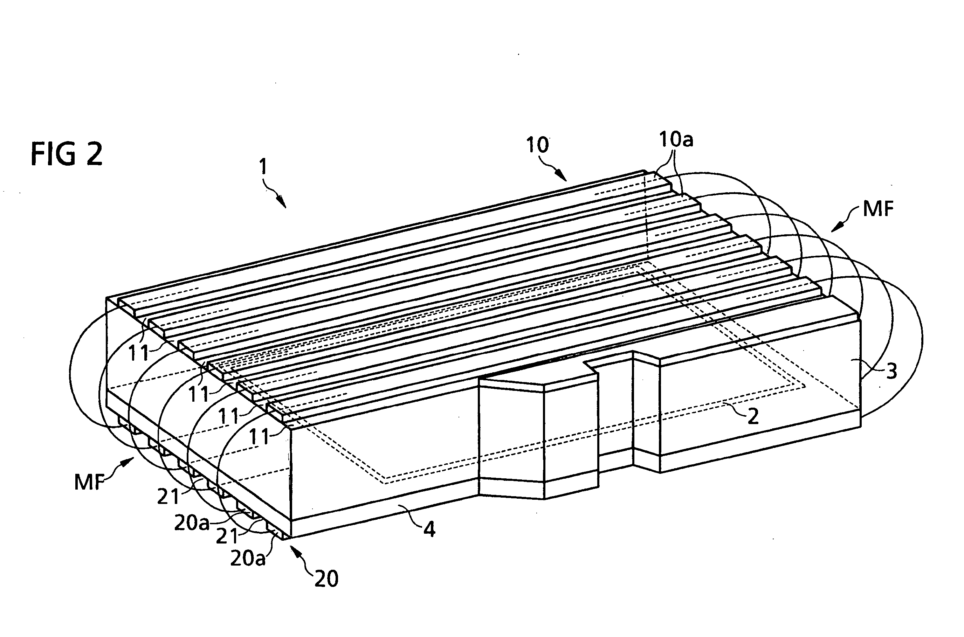

Wie in Figur 2 dargestellt, kann zusätzlich zu der Schicht 10 auf der gegenüberliegenden Seite der Antennenspule 2 eine senkrecht oder zumindest im wesentlichen senkrecht zur Spulenachse der Antennenspule 2 verlaufende zweite ferritische Fläche 20 angeordnet sein, die ebenfalls in Form einer Ferritschicht ausgeführt ist und im folgenden einfach als zweite Schicht 20 bezeichnet wird. Die zweite Schicht 20 kann wiederum anstelle eines Ferritmaterials auch aus einem anderen Material mit einer relativen Permeabilität µᵣ von mindestens 5 und einem spezifischen elektrischen Widerstand von mindestens 10⁻¹ Ωm bestehen. Die zweite Feritschicht 20 ist vorzugsweise wiederum durch dielektrische Spalte 21 in Segmente 20a unterteilt. Vorzugsweise steht auch die zweite Schicht 20 mit dem Ferritkörper 30 in leitender Verbindung, so dass eine Abschirmungsstruktur mit einem H-förmigem Querschnitt entsteht. Bei dieser Variante werden die magnetischen Feldlinien MF nicht nur durch die erste Schicht 10 sondern auch durch die zweite Schicht 20 nach außen geleitet. Die dielektrischen Spalte der zweiten Schicht erstrecken sich in derselben Richtung wie die dielektrischen Spalte 11 der ersten Schicht 10, d.h. vorliegend in Längsrichtung des Datenträgers 1, um die magnetischen Feldlinien MF auch innerhalb der zweiten Schicht 20 in dieser Richtung zu lenken.

Die Breite der dielektrischen Spalte 11, 21 der ersten und der zweiten Schicht beträgt abweichend von der schematischen Darstellung 1/2 bis 1/1000 der Breite der an die Spalte 11, 21 angrenzenden Segmente 10a, 20a.

Bei den in den Figuren 1 bis 9 dargestellten kartenförmigen Datenträgern 1 handelt es sich um micro SD Karten, bei denen auf der in den Abbildungen links oben dargestellten Seite elektrische Kontakte in Form von Kontaktflächen 5 angeordnet, zu Illustrationszwecken jedoch nur in Figur 1 explizit eingezeichnet sind. Bei dem kartenförmigen Datenträger 1 nach Figur 1 ist die Schicht 10 ferner nur in einem Bereich nicht von den Kontakten 5 belegten Bereich des Datenträgers 1 angeordnet; entsprechend erstrecken sich die dielektrischen Spalte 11 der Schicht 10 von dem Ende des von den Kontakten 5 belegten Bereichs zu dem gegenüberliegenden anderen Ende des Datenträgers 1. Durch die dielektrischen Spalte 11 werden die magnetischen Feldlinien MF innerhalb der Schicht 10, wie erläutert, so geführt, dass diese verstärkt an den beiden Schmalseiten aus der Schicht 10 austreten. Da die Schicht 10 in dem nicht die Kontakte 5 enthaltenden Bereich angeordnet ist, verlaufen die magnetischen Feldlinien MF im Bereich der Kontakte 5 überwiegend innerhalb des kartenförmigen Datenträgers 1, wohingegen sie an der den elektrischen Kontakten 5 gegenüberliegenden Seite aus dem Datenträger 1 verstärkt austreten. Wie zuvor erläutert, ragt bei einer micro SD Karte vorzugsweise genau diese Schmalseite des Datenträgers 1 aus einer Öffnung eines Lesesockels heraus, so dass die magnetischen Feldlinien MF an dieser Schmalseite - der sogenannten Pull Area der micro SD Karte - ungestört aus der Öffnung des Lesesockels austreten können.

Wie in Figur 2 angedeutet, kann zusätzlich zu der Schicht 10 auf der gegenüberliegenden Seite der Antennenspule 2 eine senkrecht oder zumindest im wesentlichen senkrecht zur Spulenachse der Antennenspule 2 verlaufende zweite Schicht 20 aus Ferritmaterial angeordnet sein, die auch wieder segmentiert sein kann. Die zweite Schicht 20 kann dabei bevorzugt ebenfalls nur in einem Bereich des den Kontakten 5 gegenüberliegenden anderen Endes des Datenträgers 1 angeordnet sein. Im Idealfall kontaktiert dann der Körper 30 nicht nur die erste, auf der Oberseite des Datenträgers angeordnete Schicht 10, sondern auch die zweite Schicht 20.

Auch können die Antennenspule 2 und die erste Schicht 10 auf einer Seite und die zweite Schicht 20 auf der gegenüberliegenden Seite des Trägersubstrats 3 angeordnet werden, wobei der Körper 30 das Trägersubstrat 3 durchdringt. Gegebenenfalls ist es zweckmäßig, dazu einen Durchbruch für den Körper 30 in der Leiterplatte 4 des kartenförmigen Datenträgers 1 zu schaffen, um einen Kontakt des Körpers 30 mit der auf der Rückseite der Leiterplatte 4 angeordneten zweiten Schicht 20 zu erzielen.

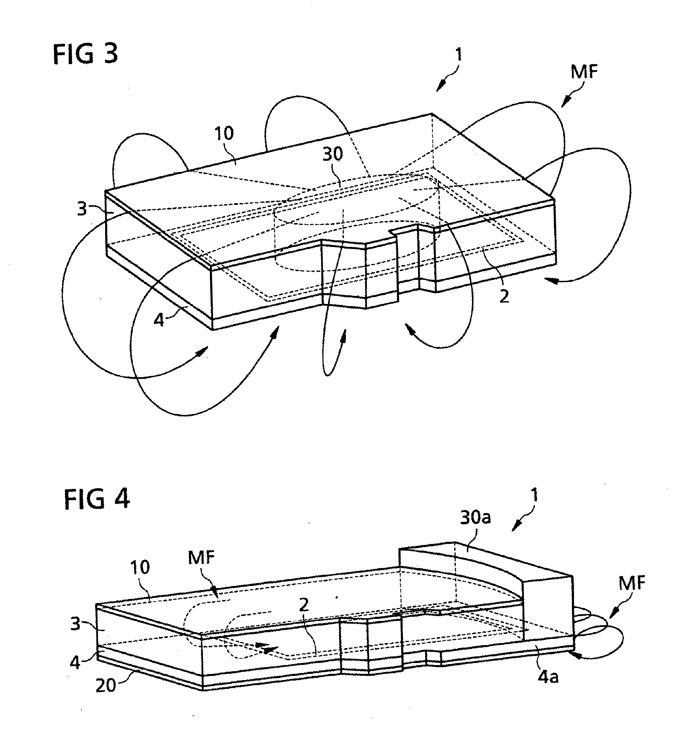

Der in Figur 4 dargestellte kartenförmige Datenträger 1 entspricht im wesentlichen dem aus Figur 1, jedoch ist die an der Oberfläche des Datenträgers 1 angeordnete Schicht 10 nicht segmentiert. Da die Schicht 10 nicht segmentiert ist, werden die magnetischen Feldlinien MF in dieser nicht durch dielektrische Spalte 11 in eine Vorzugsrichtung gelenkt. Der Datenträger 1 nach Figur 4 ist mit den sonstigen im Zusammenhang mit Figur 1 beschriebenen Aspekten kombinierbar. Außerdem kann, wie bei dem Ausführungsbeispiel gemäß Figur 2, auch eine zweite Schicht 20 vorgesehen sein, die ggf. segmentiert ist. Darüber hinaus kann die erste Schicht 10 und/oder die zweite Schicht 20 wie in Figur 3 für die erste Schicht 10 dargestellt, nur an einem Ende des Datenträgers 1 angeordnet sein, auf der die magnetischen Feldlinien MF austreten sollen, d.h. insbesondere auf einer den elektrischen Kontakten 5 gegenüberliegenden Seite des Datenträgers 1.

Bei den in den Figuren 1 bis 3 dargestellten Ausführungsbeispielen erstreckt sich der Ferritkörper 30 bei Betrachtung in Richtung der Spulenachse nur innerhalb der Spule 2, was die Wirkung des Ferritkörper 30 verbessert, da die durch den Ferritkörper 30 verlaufenden Magnetfeldlinien MF im verstärkten Maße zugleich auch durch die Antennenspule 2 verlaufen, d.h. der Ferritkörper 30 konzentriert die magnetischen Feldlinien MF in der Spule 2.

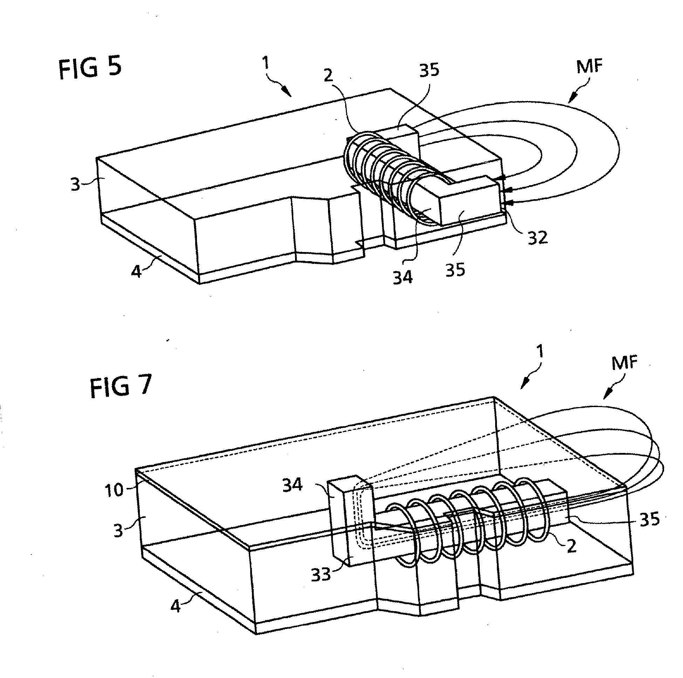

Bei dem in Figur 4 dargestellten kartenförmigen Datenträger 1 ist der Ferritkörper 30a dagegen an einem den - in Figur 5 nicht dargestellten - Kontakten 5 des Datenträgers 1 gegenüberliegenden Ende des Datenträgers 1 angeordnet. Dies ist vorliegend konstruktionstechnisch besonders günstig, da sich auf dieser Seite einer micro SD Karte die sogenannte Pull-Area der Karte befindet, d.h. ein nach oben hervorstehender Abschnitt, mittels dessen die micro SD Karte aus einem Lesesockel herausgezogen werden kann. Die Pull-Area wird vorliegend durch den Ferritkörper 30a gebildet, der mechanisch auf der Leiterplatte 4 fixiert ist. Die magnetischen Feldlinien MF werden dabei durch den am Rand des Datenträgers 1 liegenden Körper 30a hindurch zu der an der Oberseite des Datenträgers angeordneten Schicht 10 gelenkt. Gleichzeitig wird eine ausreichende mechanische Stabilität erreicht.

Bei dem in Figur 4 dargestellten Datenträger 1 ist wiederum eine zweite Ferritschicht 20 auf der Rückseite des Datenträgers 1 vorgesehen, was jedoch nicht zwingend ist. Zudem ist zwischen dem Körper 30a und der zweiten Schicht 20 ein dielektrischer Spalt 4a (d.h. ein dielektrischer Schlitz) vorhanden, der durch die Leiterplatte 4 gebildet wird. Bei dieser besonderen Anordnung treten die magnetischen Feldlinien MF durch diesen Spalt 4a aus dem kartenförmigen Datenträger 1 aus.

Auch bei dem in Figur 4 dargestellten Datenträger 1 können die an der Oberseite des Datenträgers 1 angeordnete erste Schicht 10 und/ oder die auf der Rückseite angeordnete zweite Schicht 20 segmentiert sein, und die erste Schicht 10 und/ oder die zweite Schicht 20 kann, wie in Figur 4 für die erste Schicht 10 dargestellt, nur an einem Ende des Datenträgers 1 angeordnet sein.

Beim Einbau eines kartenförmigen Datenträgers 1 mit induktiv koppelnder Datenkommunikationseinrichtung in ein elektronisches Gerät, wie z.B. in ein Mobiltelefon, werden die magnetischen Wechselfelder eines externen Lesegerätes am Ort des Datenträgers 1 stark bedämpft und die von einer Antennenspule 2 des Datenträgers 1 erzeugten magnetischen Wechselfelder treten nur stark bedämpft nach außen, wenn sich über oder unter der Antennenspule 2, im wesentlichen senkrecht zur Spulenachse der Antennenspule 2 eine Metallschicht erstreckt. Dieser Effekt wird, wenn der Datenträger 1 wie zuvor dargestellt mit der ersten Schicht 10 und/ oder der zweiten Schicht 20 versehen ist und sich die erste Schicht 10 oder die zweite Schicht 20 zwischen der Antennenspule 2 und der Metallschicht befindet, unterbunden, sofern die erste Schicht 10 und/ oder die zweite Schicht 20 eine hinreichende Dicke aufweist.

Bei den in den Figuren 1 bis 4 dargestellten Datenträgern 1 kann, wie dargestellt, die an der Oberseite des Datenträgers 1 angeordnete erste Schicht 10 sowie optional eine zweite Schicht 20 vorgesehen sein. In Bezug auf die physikalischen Eigenschaften ist eine beidseitige Anordnung von Schichten 10, 20 besonders vorteilhaft, da die Magnetfeldlinien MF dann auf der Ober- und der Unterseite des Datenträgers 1 in den Schichten 10, 20 geführt werden. Die gängigen in der Praxis verwendeten kleinstflächigen Speicherkarten, insbesondere micro SD Karten oder Memory Sticks weisen jedoch nur eine sehr geringe Dicke auf, so dass ggf. nur eine einseitige Anbringung möglich ist. Falls nur eine einseitige Anbringung möglich ist, ist die bevorzugte Anordnung bei einer micro SD Karte normalerweise die z.B. in Figur 1 dargestellte Anordnung nur der ersten Schicht 10 auf der Oberseite der Karte, da hier in der Regel durch eine mechanische Führung in einem Lesesockel eine Metallfläche (z.B. ein Metallbügel) vorhanden ist.

Bei den in Figuren 5 bis 7 dargestellten Datenträgern 1 wird die Abschirmstruktur nicht durch eine an einer Deckfläche des Datenträgers 1 liegende Schicht 10 und einen senkrecht dazu angeordneten einfachen Ferritkörper 30 mit einer einzelnen Hauptachse gebildet, sondern der Ferritkörper besitzt eine aus mehreren einfachen Teilkörpern aufgebaute geometrische Form, in der zumindest ein Teilkörper senkrecht oder im wesentlichen senkrecht zu einem anderen Teilkörper liegt. Die zu den Deckflächen des Datenträgers 1 parallelen Oberflächen des Ferritkörpers 32, 33, 37 fungieren dabei als ferritische Flächen, die durch die geometrische Form des Körpers 32, 33, 37 segmentiert werden. Eine oder ggf. zwei separate ferritische Flächen bzw. Schichten 10, 20, wie in den Ausführungsformen nach den Fig. 1 bis 4 können bei diesen Ausführungen vorgesehen sein, sind aber nicht zwingend erforderlich.

Bei dem in Figur 5 dargestellten Datenträger 1 ist der Ferritkörper 32 der Abschirmungsstruktur in Form eines parallel zu den Deckflächen des Datenträgers 1 liegenden U mit einer Basis 34 und zwei davon ausgehenden Schenkeln 35 ausgebildet. Die offene Seite des U ist einer der schmalen Stirnseiten des Datenträgers 1 zugewandt. Der integrale U-förmige Ferritkörper 32 kann wiederum auch aus einem anderen Material mit einer relativen Permeabilität µᵣ von mindestens 5 und einem spezifischen elektrischen Widerstand von mindestens 10⁻¹ Ωm bestehen. Die Antennenspule 2 ist in mehreren axial beabstandeten Windungen um die zwischen den beiden Schenkeln liegende Basis des U-förmigen Ferritkörpers32 gewickelt. Der integrale U-förmige Körper 32 ist zwischen der Basis und jedem der Schenkel um ca. 90° gekrümmt. Alternativ könnte der integrale U-förmige Ferritkörper 32 insbesondere auch gleichmäßig zwischen den beiden Schenkeln um ca. 180° gekrümmt sein, d.h. eine Hufeisenform aufweisen.

Die magnetischen Feldlinien MF werden durch den U-förmigen Ferritkörper 32 gebündelt und durch den U-förmigen Körper 32 hindurch zu den beiden Enden der Schenkel des U-förmigen Körpers 32 gelenkt. Vorliegend ist der Körper 32 so ausgerichtet, dass die Schenkel des Körpers 32 parallel zu den Längsseiten des Datenträgers 1 verlaufen und die magnetischen Feldlinien MF an der den - nicht dargestellten - elektrischen Kontakten 5 gegenüberliegenden Schmalseite des Datenträgers 1 aus dem Datenträger 1 austreten. Wie zuvor erläutert, besitzen Lesesockel in diesem Bereich normalerweise eine Öffnung, so dass die magnetischen Feldlinien MF aus dieser Öffnung ungestört austreten können.

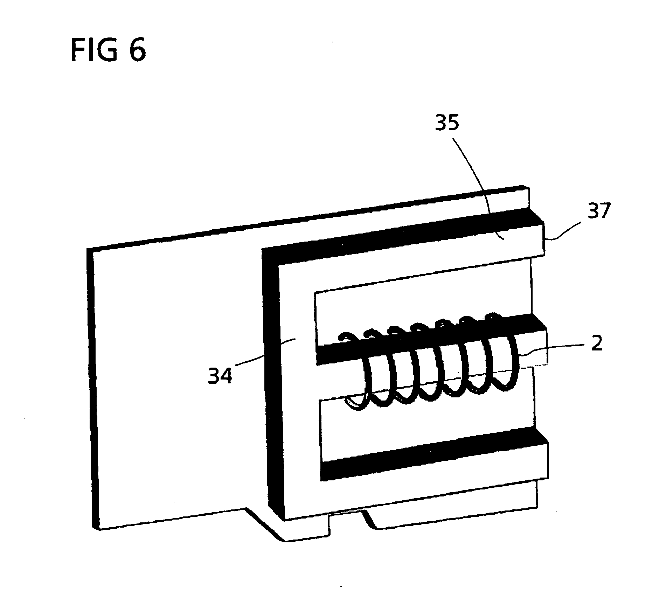

In der in Fig. 6 gezeigten Variante zu der Ausführung nach Fig. 5 kann der Ferritkörper 37 auch die Form eines Doppel-U bzw. eine E-Form mit einer Basis 34 und drei davon abgehenden Schenkeln 35 aufweisen, wobei die Antennenspule 2 in mehreren axial beabstandeten Windungen zumindest um einen Schenkel 35 oder um die zwischen den Schenkeln liegende Basis, vorzugsweise um den zentralen Schenkel der E-förmigen Struktur herum gewickelt ist.

Bei dem in Figur 7 dargestellten Datenträger 1 besitzt die Abschirmungsstruktur ebenfalls eine U-förmige Struktur. Die U-Form wird wird hier jedoch aus einer Schicht 10 und einem L-förmigen Ferritkörper 33 gebildet. Der L-förmige Ferritkörper 33 ist zwischen seiner Basis 34 und seinem Schenkel 35 um ca. 90° gekrümmt und kontaktiert mit der Basis 34 die Schicht 10, wobei ein dielektrischer Spalt zwischen der Schicht 10 und dem Körper 33 vermieden werden soll. Die Spule 2 ist um den Schenkel 35 des L-förmigen Körpers 33 gewickelt, weil dieser, da er in Längsrichtung des Datenträgers 1 verläuft, länger als dis Basis 34 ist und somit mehr Platz für die Anordnung der Spule 2 bietet. Wie dargestellt werden die magnetischen Feldlinien MF durch die Schicht 10 und die Basis 34 des L-förmigen Körpers 33 hindurch zu dem Ende des Schenkels 35 des L-förmigen Körpers 33 gelenkt, d.h. die Spule 2 wird durch den L-förmigen Körper 33 an die Schicht "angekoppelt". Die Wirkung des L-förmigen Körpers 33 in Kombination mit der Schicht 10 ist somit mit der des U-förmigen Körpers 32 aus Figur 5 vergleichbar, wobei das U hier um 90° um die Längsachse des Datenträgers 10 gedreht ist. Die Schicht 10 ist in dem vorliegenden Ausführungsbeispiel an der Oberseite des Datenträgers 1 angeordnet. Alternativ dazu könnte eine entsprechende Schicht 20 an der Unterseite des Datenträgers vorgesehen sein, die von einem im Vergleich zu Figur 7 um 180° gedrehten L-förmigen Körper 33 kontaktiert wird.

Der Schenkel 35 des L-förmigen Körpers 33 endet in einem Bereich des den (nicht dargestellten) elektronischen Kontakten gegenüberliegenden anderen Endes des Datenträgers 1, so dass die magnetischen Feldlinien MF an der den elektrischen Kontakten gegenüberliegenden Schmalseite des Datenträgers 1 austreten. Die Schicht 10 kann zusätzlich, wie in den Figuren 1 und 2 dargestellt, durch Spalte 11 segmentiert sein, um die magnetischen Feldlinien MF innerhalb der Schicht 10 in Längsrichtung der Spalte 11 zu lenken, die sich dazu vorzugsweise in einer zu dem Schenkel 35 des L-förmigen Körpers 33 parallelen Richtung erstrecken, um die magnetischen Feldlinien MF in dieser Richtung zu führen.

In allen Figuren 5 bis 7 sind die für die Körper 32, 33, 37 angedeuteten Maße für Basis 34 und Schenkel 35 und deren gleichförmige Dimensionierung mit näherungsweise quadratischem Querschnitt nur beispielhaft zu verstehen. In allen Fällen können die Körper 32, 33, 37 z.B. auch mit rechteckigen oder ellipsoiden Querschnitten ausgeführt sein oder Basis 34 und Schenkel 35 können unterschiedlich dimensioniert sein.

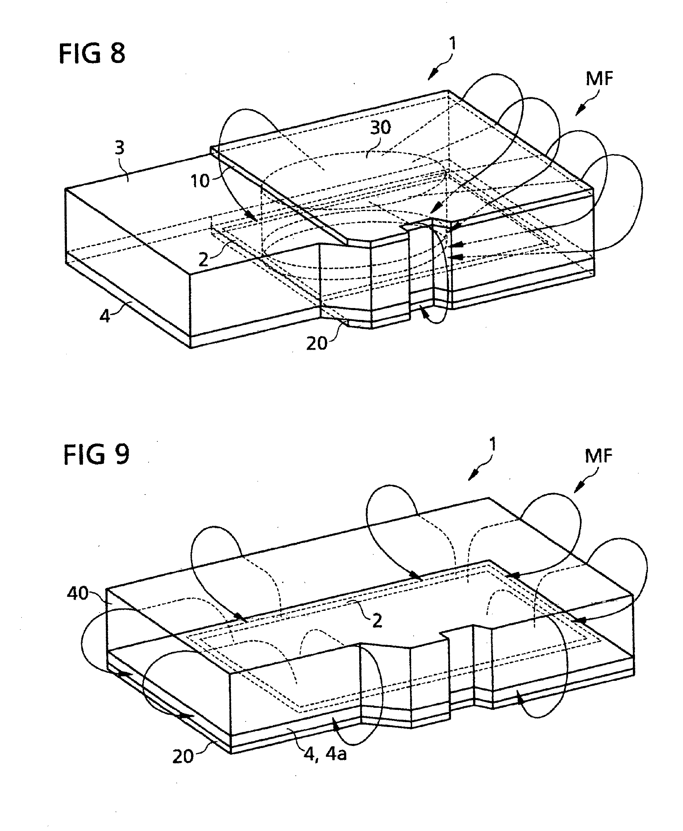

Bei dem in Figur 8 dargestellten kartenförmigen Datenträger 1 ist in Analogie zu Figur 7 eine U-förmige Struktur aus einem Ferritmaterial vorgesehen, die vorliegend aus einer ersten Schicht 10, einer von der ersten Schicht 10 beabstandeten zweiten Schicht 20 und einem Körper 30, der die erste und die zweite Schicht kontaktiert, gebildet wird. Eine entsprechende U-förmige Struktur ist bereits zuvor im Zusammenhang mit den Figuren 3 und 4 erläutert worden.

Bei dieser Anordnung werden die Feldlinien MF durch den Körper 30 und die erste Schicht 10 und die zweite Schicht 20 hindurch gelenkt und treten verstärkt aus den freien Enden der beiden Schenkel der U-förmigen Struktur 10, 20, 30, d.h. aus den beiden Schichten 10, 20, aus. Dabei sind die Schichten 10, 20 nur im Bereich des den (nicht dargestellten) Kontakten gegenüberliegenden anderen Endes des Datenträgers 1 angeordnet, so dass die magnetischen Feldlinien hier aus dem Datenträger 1 austreten.

Damit der Körper 30 nicht nur die erste Schicht 10 sondern auch die zweite Schicht 20 kontaktiert, ist in der Leiterplatte 4 des Datenträgers 1 eine entsprechende Aussparung für den Körper 30 vorgesehen.

Auch bei dem Datenträger 1 in Figur 8 kann wiederum zumindest eine der beiden Schichten 10, 20 entsprechend den Figuren 1 und 2 segmentiert sein, um die Feldlinien MF entsprechend abzulenken.

Damit das Material der an der Oberseite des Datenträgers angeordneten ersten Schicht 10 und der zweiten Schicht 20 sowie das Material der Körper 30, 30a, 32, 33 der Figuren 1 bis 8 die magnetischen Feldlinien MF ablenkt, gleichzeitig jedoch nur geringfügig durch induzierte Wirbelströme schwächt, besitzt es eine möglichst hohe relative Permeabilität µᵣ und gleichzeitig eine möglichst geringe elektrische Leitfähigkeit, d.h. einen möglichst hohen spezifischen elektrischen Widerstand.

Bevorzugt hat die relative Permeabilität µr einen Wert von mindestens 100, besonders bevorzugt mindestens 140, 160, 180 oder sogar 200. Ebenso bevorzugt hat der spezifische elektrische Widerstand einen Wert von mindestens 1, 10, 10², 10³, 10⁴, 10⁵ oder gar 10⁶ Ωm. Außerdem ist der Imaginärteil der komplexen Permeabilität µᵣ", der die Größe der Ummagnetisierungsverluste im Material kennzeichnet, möglichst klein, das heißt, die Ummagnetisierungsverluste sind möglichst klein zu halten. Die zuvor genannten Werte beziehen sich dabei auf den Frequenzbereich des zur Datenübertragung verwendeten elektromagnetischen Wechselfeldes. Dieser liegt vorzugsweise bei 13,56 MHz.

Bei dem Material der ersten Schicht 10 und der zweiten Schicht 20 sowie dem Material der Körper 30, 30a, 32, 33 kann es sich, wie ausgeführt, insbesondere um ein Ferritmaterial handeln. Dementsprechend kann es sich bei der ersten Schicht 10 und/oder der zweiten Schicht 20 um eine Ferritfolie handeln und bei den Körpern 30, 30a, 32, 33 um Ferritformteile.

Bei dem in Figur 9 dargestellten Datenträger 1 wird dagegen die über der Antennenspule 2 angeordnete hochpermeable Schicht 40 durch eine polymere Vergussmasse 40 mit darin eingelagerten ferromagnetischen Partikeln gebildet. Die aus der permeablen Vergussmasse 40 bestehende Schicht wird unter Einwirkung eines Magnetfelds MF gebildet, wobei das Magnetfeld MF beim Vergießen und /oder beim Verfestigungsprozess der Vergussmasse 40 angelegt wird. Entscheidend für die erreichbare relative Permeabilität µᵣ ist die Ausrichtung der ferromagnetischen Partikel innerhalb der Vergussmasse 40. Durch die Einwirkung eines Magnetfelds beim Bilden der aus der permeablen Vergussmasse 40 bestehenden Schicht, d.h. beim Vergießen oder bei dem Verfestigungsprozess kann eine hohe relative Permeabilität µᵣ der Vergussmasse 40 erzielt werden. Auch ist es denkbar, die ferromagnetischen Partikel der Vergussmasse 40 durch das Magnetfeld beim Vergießen und oder bei dem Verfestigungsprozess in der Vergussmasse nach außen (d.h. in Fig. 8 nach oben und/ oder unten) zu bewegen, um hierdurch eine Schicht von erhöhter Permeabilität innerhalb der Vergussmasse 40 zu bilden.

Auf diese Weise besitzt die Vergussmasse eine relative Permeabilität von mindestens 5. Im übrigen besteht die Vergussmasse aus einem Material mit einem spezifischen elektrischen Widerstand von mindestens 10⁻¹ Ωm.

Wie in Figur 9 angedeutet werden die magnetischen Feldlinien MF durch die Vergussmasse 40 hindurch nach außen geleitet. Dabei verlaufen die magnetischen Feldlinien MF am seitlichen Rand der Vergussmasse überwiegend an der Oberfläche der Vergussmasse 40, wohingegen sie in einem weiter innen gelegenen Bereich der Vergussmasse 40 nach unten durch die Vergussmasse 40 und durch die Spule 2 hindurch verlaufen. In Analogie zu der ersten Schicht 10 der Figuren 1 bis 5 kann durch die Vergussmasse 40 eine durch eine Metallschicht, die sich über der Antennenspule 2 erstreckt, hervorgerufene Dämpfung der von einem externen Lesegerät erzeugten elektromagnetischen Wechselfelder am Ort der Antennenspule 2 und der von der Antennenspule 2 selbst erzeugten elektromagnetischen Wechselfelder vermieden werden.

Die permeable Vergussmasse 40 weist bevorzugt eine relative Permeabilität µᵣ von mindestens 10, besonders bevorzugt von mindestens 100 auf. Die zuvor genannten Werte beziehen sich dabei auf den Frequenzbereich des elektromagnetischen Wechselfeldes. Dieser liegt vorzugsweise bei 13,56 MHz.

Beabstandet von der Vergussmasse 40 und auf einer der Vergussmasse 40 gegenüberliegenden Seite der Antennenspule 2 ist eine senkrecht oder zumindest im wesentlichen senkrecht zur Spulenachse der Antennenspule 2 verlaufende zweite Ferritschicht 20 aus einem Material mit einer relativen Permeabilität µr von mindestens 5 und einem spezifischen elektrischen Widerstand von mindestens 10⁻¹ Ωm angeordnet. Besonders bevorzugt hat das Material der zweiten Schicht 20 die vorstehend erläuterten physikalischen Eigenschaften, und es handelt sich insbesondere vorzugsweise um ein Ferritmaterial. Zwischen der Vergussmasse 40 und der zweiten Schicht 20 wird ein dielektrischer Spalt 4a gebildet, durch den die magnetischen Feldlinien MF bevorzugt hindurch verlaufen. Die zusätzliche zweite Schicht 20 ist nicht zwingend erforderlich. Gemäß einer bevorzugten Ausführungsform kann die zweite Schicht 20 auch in Analogie zu den Schichten 10, 20 der Figuren 1 bis 3 segmentiert sein, um die magnetischen Feldlinien MF entsprechend zu lenken.

Bei der Datenkommunikationseinrichtung der zuvor beschriebenen Ausführungsbeispiele handelt es sich besonders bevorzugt um eine RFID-Transpondereinheit, die mit aktiver Lastmodulation arbeitet, oder auch um eine sonstige funkbasierte Datenkommunikationseinrichtung, die ein aktives Verfahren zum Senden von Daten verwendet.

## Patentansprüche

1. Tragbarer Datenträger (1) mit einem Trägersubstrat (3) und einer induktiv koppelnden Datenkommunikationseinrichtung mit einer Antennenspule (2) sowie mit einer magnetfeldbeeinflussenden Abschirmstruktur aus einem Material mit einer relativen Permeabilität µᵣ von mindestens 5 und einem spezifischen elektrischen Widerstand von mindestens 10⁻¹ Ωm, wobei die Abschirmstruktur zumindest eine senkrecht oder zumindest im wesentlichen senkrecht zur Spulenachse der Antennenspule verlaufende ferritische Fläche (10) aufweist, **dadurch gekennzeichnet, dass**
die Abschirmstruktur einen innerhalb des Trägersubstrats (3) angeordneten Körper (30, 32, 33, 37) aufweist, der sich zumindest in einer Richtung parallel zur Spulenachse erstreckt.

2. Tragbarer Datenträger (1) nach Anspruch 1,
**dadurch gekennzeichnet, dass**
die ferritische Fläche (10) als erste Schicht ausgebildet ist, welche in mindestens zwei Segmente (10a) unterteilt ist, die jeweils durch einen Spalt (11) aus einem dielektrischen Material voneinander getrennt sind,
und der innerhalb des Trägersubstrats (3) angeordnete Körper (30) die erste Schicht (10) kontaktiert.

3. Tragbarer Datenträger (1) nach Anspruch 1, **dadurch gekennzeichnet, dass** die ferritische Fläche (10) als erste Schicht ausgebildet ist und beabstandet von der ersten Schicht (10) und auf einer der ersten Schicht (10) gegenüberliegenden Seite der Antennenspule (2) eine senkrecht oder zumindest im wesentlichen senkrecht zur Spulenachse der Antennenspule (2) verlaufende zweite ferritische Fläche (20) angeordnet ist, die als zweite Schicht ausgebildet ist und aus einem Material mit einer relativen Permeabilität µr von mindestens 5 und einem spezifischen elektrischen Widerstand von mindestens 10⁻¹ Ωm besteht, wobei der Körper (30) auch die zweite Schicht (20) kontaktiert.

4. Tragbarer Datenträger (1) nach Anspruch 3, **dadurch gekennzeichnet, dass** die zweite Schicht (20) in mindestens zwei Segmente (20a) unterteilt ist, die jeweils durch einen Spalt (21) aus einem dielektrischen Material voneinander getrennt sind.

5. Tragbarer Datenträger (1) nach einem der Ansprüche 3 oder 4, **dadurch gekennzeichnet, dass** die Antennenspule (2) und die erste Schicht (10) auf einer Seite des Trägersubstrats (3) und die zweite Schicht (20) auf der gegenüberliegenden Seite des Trägersubstrats (3) angeordnet sind, wobei der Körper (30) das Trägersubstrat (3) durchdringt.

6. Tragbarer Datenträger nach einem der Ansprüche 2 bis 5, **dadurch gekennzeichnet, dass** die Segmente (10a, 20a) länglich sind und dass die Breite des Spalts (11, 21) aus dielektrischem Material das 2 bis 1000 fache der Breite der an den Spalt (11, 21) angrenzenden Segmente (10a, 20a) beträgt.

7. Tragbarer Datenträger (1) nach einem der Ansprüche 2, 4-6, **dadurch gekennzeichnet, dass** der Spalt (11, 21) aus dielektrischem Material in Längsrichtung des kartenförmigen Datenträgers (1) verläuft.

8. Tragbarer Datenträger (1) nach einem der Ansprüche 1 bis 7, **dadurch gekennzeichnet, dass** an einem Ende des Datenträgers (1) elektrische Kontakte (5) angeordnet sind und die ferritische Fläche (10) nur in einem Bereich des den Kontakten (5) gegenüberliegenden anderen Endes des Datenträgers (1) angeordnet ist.

9. Tragbarer Datenträger (1) nach Anspruch 1,
**dadurch gekennzeichnet, dass** der Körper (32) U-förmig (32; 10, 33; 10, 20, 30) mit einer Basis (34) und zwei davon abgehenden Schenkeln (35) ausgebildet ist, wobei die Basis (34) senkrecht oder zumindest im wesentlichen senkrecht zur Spulenachse der Antennenspule (2) angeordnet ist und wobei die Antennenspule (2) in mehreren axial beabstandeten Windungen zumindest um einen Schenkel (35) oder um die zwischen den Schenkeln liegende Basis (34) der U-förmigen Struktur (32; 10, 33; 10, 20,30) herum gewickelt ist und wobei die parallel zu den Deckflächen des Datenträgers (1) verlaufenden Oberflächen des Körpers (32) ferritische Flächen bilden.

10. Tragbarer Datenträger (1) nach Anspruch 9, **dadurch gekennzeichnet, dass** die Abschirznstruktur ein integraler U-förmiger Körper (32) ist, der parallel zur den Deckflächen des Datenträgers (1) angeordnet ist.

11. Tragbarer Datenträger (1) nach Anspruch 9, **dadurch gekennzeichnet, dass** der Körper (37) E-förmig mit einer Basis (34) und drei davon abgehenden Schenkeln (35) ausgebildet ist, wobei die Antennenspule (2) in mehreren axial beabstandeten Windungen zumindest um einen Schenkel oder um die zwischen den Schenkeln liegende Basis der E-förmigen Struktur herum gewickelt ist.

12. Tragbarer Datenträger (1) nach Anspruch 9, **dadurch gekennzeichnet, dass** die U-förmige Struktur (10, 33) aus einer parallel oder zumindest im wesentlichen parallel zur Spulenachse der Antennenspule (2) verlaufenden ersten Schicht (10) und einem L-förmigen Körper (33), der eine Basis und einen Schenkel besitzt und mit dem Schenkel die erste Schicht (10) kontaktiert, gebildet wird.

13. Tragbarer Datenträger (1) nach einem der vorhergehenden Ansprüche, **dadurch gekennzeichnet, dass** die ferritische Fläche (10) durch eine polymere Vergussmasse (40) mit darin eingelagerten ferromagnetischen Partikeln gebildet ist.

14. Tragbarer Datenträger (1) nach Anspruch 13, **dadurch gekennzeichnet, dass** die polymere Vergussmasse (40) ein thermoplastisches Polymer oder ein vernetzendes Polymer mit ferromagnetischen Partikeln ist.

15. Verfahren zum Herstellen eines tragbaren Datenträgers (1) nach Anspruch 13 oder 14, **dadurch gekennzeichnet, dass** das Bilden der ersten, aus der polymere Vergussmasse (40) bestehenden Schicht unter Einwirkung eines Magnetfelds erfolgt.

## Claims

1. A portable data carrier (1) having a carrier substrate (3) and an inductively coupling data communication device with an antenna coil (2), and having a magnetic-field influencing shielding structure of a material with a relative permeability µᵣ of at least 5 and a specific electrical resistance of at least 10⁻¹ Ωm, wherein the shielding structure has at least one ferritic area (10) extending perpendicularly or at least essentially perpendicularly to the coil axis of the antenna coil, **characterized in that**
the shielding structure has a body (30, 32, 33, 37) which is arranged within the carrier substrate (3) and extends parallel to the coil axis in at least one direction.

2. The portable data carrier (1) according to claim 1,
**characterized in that**
the ferritic area (10) is configured as first layer which is divided into at least two segments (10a) that are respectively separated from each other by a gap (11) of a dielectric material, and the body (30) arranged within the carrier substrate (3) contacts the first layer (10).

3. The portable data carrier (1) according to claim 1, **characterized in that** the ferritic area (10) is configured as first layer and that there is arranged, spaced apart from the first layer (10) and on a side of the antenna coil (2) lying opposite from the first layer (10), a second ferritic area (20) which extends perpendicularly or at least essentially perpendicularly to the coil axis of the antenna coil (2), said second ferritic area (20) being configured as second layer and consisting of a material with a relative permeability µᵣ of at least 5 and a specific electrical resistance of at least 10⁻¹ Ωm, wherein the body (30) contacts also the second layer (20).

4. The portable data carrier (1) according to claim 3, **characterized in that** the second layer (20) is divided into at least two segments (20a) which are separated from each other respectively by a gap (21) of a dielectric material.

5. The portable data carrier (1) according to any of the claims 3 or 4, **characterized in that** the antenna coil (2) and the first layer (10) are arranged on one side of the carrier substrate (3), and the second layer (20) on the opposite side of the carrier substrate (3), with the body (30) penetrating the carrier substrate (3).

6. The portable data carrier according to any of the claims 2 to 5, **characterized in that** the segments (10a, 20a) are elongated and that the width of the gap (11, 21) of dielectric material amounts to the 2-fold up to the 1000-fold of the width of the segments (10a, 20a) adjoining the gap (11, 21).

7. The portable data carrier (1) according to any of the claims 2, 4-6, **characterized in that** the gap (11, 21) of a dielectric material extends in the longitudinal direction of the card-shaped data carrier (1).

8. The portable data carrier (1) according to any of the claims 1 to 7, **characterized in that** at one end of the data carrier (1) electrical contacts (5) are arranged and the ferritic area (10) is arranged only in a region of the other end of the data carrier (1) lying opposite the contacts (5).

9. The portable data carrier according to claim 1,
**characterized in that** the body (32) is configured to be U-shaped (32; 10, 33; 10, 20, 30) with a base (34) and two arms (35) extending therefrom, wherein the base (34) is arranged perpendicularly or at least essentially perpendicularly to the coil axis of the antenna coil (2) and wherein the antenna coil (2), by several axially spaced-apart windings, is wound at least around one arm (35) or around the base (34) of the U-shaped structure (32; 10, 33; 10, 20, 30) lying between the arms, and wherein the surfaces of the body (32) that extend parallel to the cover surfaces of the data carrier (1) form ferritic areas.

10. The portable data carrier (1) according to claim 9, **characterized in that** the shielding structure is an integral U-shaped body (32) that is arranged parallel to the cover surfaces of the data carrier (1).

11. The portable data carrier (1) according to claim 9, **characterized in that** the body (37) is configured to be E-shaped, having a base (34) and three arms (35) extending therefrom, wherein the antenna coil (2), by several axially spaced-apart windings, is wound at least around one arm or around the base of the E-shaped structure lying between the arms.

12. The portable data carrier (1) according to claim 9, **characterized in that** the U-shaped structure (10, 33) is formed by a first layer (10) extending parallel or at least essentially parallel to the coil axis of the antenna coil (2) and an L-shaped body (33) which has a base and an arm and contacts the first layer (10) with said arm.

13. The portable data carrier (1) according to any of the preceding claims, **characterized in that** the ferritic area (10) is formed by a polymer casting compound (40) with ferromagnetic particles embedded therein.

14. The portable data carrier (1) according to claim 13, **characterized in that** the polymer casting compound (40) is a thermoplastic polymer or a crosslinking polymer with ferromagnetic particles.

15. A method for manufacturing a portable data carrier (1) according to claim 13 or 14, **characterized in that** the forming of the first layer consisting of the polymer casting compound (40) takes place under the action of a magnetic field.

## Revendications

1. Support de données portable (1) comportant un substrat porteur (3) et un dispositif de communication de données à couplage inductif comprenant une bobine d'antenne (2) ainsi qu'une structure de blindage influençant le champ magnétique constituée d'un matériau présentant une perméabilité relative µᵣ d'au moins 5 et une résistance électrique spécifique d'au moins 10⁻¹ Ωm, la structure de blindage comportant au moins une surface ferritique (10) perpendiculaire ou au moins essentiellement perpendiculaire à l'axe de bobine de la bobine d'antenne, **caractérisé en ce que**
la structure de blindage comporte un corps (30, 32, 33, 37) qui est agencé à l'intérieur du substrat porteur (3) et est, au moins dans un sens, parallèle à l'axe de bobine.

2. Support de données portable (1) selon la revendication 1,
**caractérisé en ce que**
la surface ferritique (10) est réalisée en tant que première couche, laquelle est subdivisée en au moins deux segments (10a) qui sont respectivement séparés l'un de l'autre par une fente (11) constituée d'un matériau diélectrique,
et **en ce que** le corps (30) agencé à l'intérieur du substrat porteur (3) entre en contact avec la première couche (10).

3. Support de données portable (1) selon la revendication 1,
**caractérisé en ce que** la surface ferritique (10) est réalisée en tant que première couche et **en ce que**, de manière espacée de la première couche (10) et d'un côté de la bobine d'antenne (2) opposé à la première couche (10), une seconde surface ferritique (20) perpendiculaire ou au moins essentiellement perpendiculaire à l'axe de bobine de la bobine d'antenne (2) est agencée, étant réalisée sous forme de seconde couche et consistant en un matériau présentant une perméabilité relative µᵣ d'au moins 5 et une résistance électrique spécifique d'au moins 10⁻¹ Ωm, le corps (30) entrant aussi en contact avec la seconde couche (20).

4. Support de données portable (1) selon la revendication 3, **caractérisé en ce que** la seconde couche (20) est subdivisée en au moins deux segments (20a) qui sont respectivement séparés l'un de l'autre par une fente (21) constituée d'un matériau diélectrique.

5. Support de données portable (1) selon une des revendications 3 ou 4, **caractérisé en ce que** la bobine d'antenne (2) et la première couche (10) sont agencées d'un côté du substrat porteur (3) et **en ce que** la seconde couche (20) est agencée du côté opposé du substrat porteur (3), le corps (30) transperçant le substrat porteur (3).

6. Support de données portable selon une des revendications de 2 à 5, **caractérisé en ce que** les segments (10a, 20a) sont oblongs et **en ce que** la largeur de la fente (11, 21) en matériau diélectrique est de 2 à 1000 fois la largeur des segments (10a, 20a) adjacents à la fente (11, 21).

7. Support de données portable (1) selon une des revendications de 2, 4-6, **caractérisé en ce que** la fente (11, 21) en matériau diélectrique est orientée dans le sens longitudinal du support de données (1) en forme de carte.

8. Support de données portable (1) selon une des revendications de 1 à 7, **caractérisé en ce que,** à une extrémité du support de données (1), des contacts électriques (5) sont agencés, et **en ce que** la surface ferritique (10) n'est agencée que dans une zone de l'autre extrémité du support de données (1) opposée aux contacts (5).

9. Support de données portable (1) selon la revendication 1,
**caractérisé en ce que** le corps (32) est réalisé en forme de U (32; 10, 33; 10, 20, 30) avec une base (34) dont émanent deux branches (35), la base (34) étant perpendiculaire ou au moins essentiellement perpendiculaire à l'axe de bobine de la bobine d'antenne (2), et la bobine d'antenne (2) étant, en plusieurs spires axialement espacées, au moins enroulée autour d'une branche (35) ou autour de la base (34), située entre les branches, de la structure en forme de U (32; 10, 33; 10, 20, 30), et les surfaces du corps (32) parallèles aux surfaces couvrantes du support de données (1) constituant des surfaces ferritiques.

10. Support de données portable (1) selon la revendication 9, **caractérisé en ce que** la structure de blindage est un corps (32) intégral en forme de U qui est agencé parallèlement aux surfaces couvrantes du support de données (1).

11. Support de données portable (1) selon la revendication 9, **caractérisé en ce que** le corps (37) est réalisé en forme de E avec une base (34) dont émanent trois branches (35), la bobine d'antenne (2) étant, en plusieurs spires axialement espacées, au moins enroulée autour d'une branche ou autour de la base, située entre les branches, de la structure en forme de E.

12. Support de données portable (1) selon la revendication 9, **caractérisé en ce que** la structure (10, 33) en forme de U est constituée par une première couche (10) parallèle ou au moins essentiellement parallèle à l'axe de bobine de la bobine d'antenne (2) et par un corps (33) en forme de L qui possède une base et une branche et entre, par la branche, en contact avec la première couche (10).

13. Support de données portable (1) selon une des revendications précédentes, **caractérisé en ce que** la surface ferritique (10) est constituée par une masse de scellement polymère (40) dans laquelle sont noyées des particules ferromagnétiques.

14. Support de données portable (1) selon la revendication 13, **caractérisé en ce que** la masse de scellement polymère (40) est un polymère thermoplastique ou un polymère réticulant comportant des particules ferromagnétiques.

15. Procédé de fabrication d'un support de données portable (1) selon la revendication 13 ou 14, **caractérisé en ce que** la constitution de la première couche consistant en la masse de scellement polymère (40) a lieu sous action d'un champ magnétique.
